# EUROPÄISCHE PATENTANMELDUNG

(11) **EP 3 450 511 A1**
(43) Veröffentlichungstag der Anmeldung: **06.03.2019**
(21) Anmeldenummer: 17188436.4
(22) Anmeldetag: 29.08.2017
(51) Int. Cl.: C09D 5/16, C08K 3/22, C08K 5/56

(54) **ZUSAMMENSETZUNG ZUM AUFTRAGEN AUF EINER OBERFLÄCHE ZUR AUSBILDUNG EINER SCHÜTZENDEN BESCHICHTUNG, VERFAHREN ZUR HERSTELLUNG EINER SOLCHEN ZUSAMMENSETZUNG, DEREN VERWENDUNG, VERFAHREN ZUR BESCHICHTUNG EINES GEGENSTANDS UND BESCHICHTUNG**

(71) Anmelder: Kirchmayer, Johann, 8020 Graz (AT); Höller, Anita, 8073 Feldkirchen bei Graz (AT)
(72) Erfinder: Baumgärtner, Harald, 5600 St. Johann im Pongau (AT)

(57) **Zusammenfassung**

Die vorliegende Erfindung betrifft eine Zusammensetzung zum Auftragen auf einer Oberfläche zur Ausbildung einer schützenden, insbesondere schmutzabweisenden, Beschichtung, wobei die Zusammensetzung zwei unterschiedliche Titanverbindungen umfasst, eine Lösung oder eine Suspension von Partikeln aus Titandioxid in einer Säure und ein organisches Titanat. Des Weiteren enthält die Zusammensetzung Ethanol, mindestens einen weiteren Alkohol, der bei 20°C einen niedrigeren Dampfdruck aufweist als Ethanol und mit Ethanol in beliebigen Verhältnissen mischbar ist, ein Polysiloxan oder ein Derivat davon und optional ein oder mehrere Additive. Darüber hinaus betrifft die vorliegende Erfindung ein Verfahren zur Herstellung einer solchen Zusammensetzung, deren Verwendung, ein Verfahren zur Beschichtung eines Gegenstands und eine entsprechende titanhaltige Beschichtung.

## Beschreibung

### GEBIET DER ERFINDUNG

Die vorliegende Erfindung betrifft eine Zusammensetzung zum Auftragen auf einer Oberfläche zur Ausbildung einer schützenden, insbesondere schmutzabweisenden, Beschichtung bzw. eines entsprechenden Überzugs. Des Weiteren betrifft die vorliegende Erfindung ein Verfahren zur Herstellung einer solchen Zusammensetzung, deren Verwendung, ein Verfahren zur Beschichtung eines Gegenstands und eine entsprechende titanhaltige Beschichtung.

### HINTERGRUND

Es besteht in verschiedenen Bereichen ein Bedarf, vorhandene Oberflächen vor einer nachhaltigen Verschmutzung zu schützen. Dazu zählen beispielsweise Oberflächen im Innenraum und an Lacken und Chromflächen von Fahrzeugen, aber auch Oberflächen aus Marmor, Stein, Fliesen, Klinker, und bei allen glatten Flächen in Wohn- oder Industriebereichen, beispielsweise Herde, Fenster, und auch in Badebereichen.

Aus dem Stand der Technik sind verschiedene Zusammensetzungen bekannt, die auf Oberflächen von Gegenständen aufgebracht werden können, um die Gegenstände vor nachhaltiger Verschmutzung zu schützen. Durch das Aufbringen einer Zusammensetzung wird ein Überzug geschaffen, welcher die darunterliegende, empfindlichere Oberfläche schützt. Bekannt sind in diesem Zusammenhang Zusammensetzungen, die auf Titandioxid und gegebenenfalls weiteren Oxiden wie Siliciumdioxid basieren (DE 29 49 168 A1, WO 2007/073043 A2, US 2008/0250978 A1, WO 2006/049368 A1).

Bei den bekannten Zusammensetzungen des Standes der Technik ist nachteilig, dass diese oftmals nur aufwendig aufzubringen sind und bei erhöhten Temperaturen ausgehärtet werden müssen. Dies führt zu einem weiteren Nachteil, der darin besteht, dass sich entsprechend gebildete Überzüge nur schwer von den Oberflächen wieder entfernen lassen. Ein relativ leichtes Entfernen kann jedoch erwünscht sein, wenn ein Überzug verschmutzt ist und ein neuer Überzug aufgebracht werden soll, um wieder eine saubere Oberflächenstruktur zu schaffen.

Es besteht daher ein Bedarf an einer Verbesserung von Beschichtungen, insbesondere zur Vermeidung nachhaltiger Verschmutzungen, ohne den oben beschriebenen Einschränkungen bzw. Nachteilen zu unterliegen.

### AUFGABEN DER ERFINDUNG

Eine Aufgabe der vorliegenden Erfindung ist es daher, eine Zusammensetzung bereitzustellen, die auf einfache Weise auf einen Gegenstand aufgebracht werden kann und dabei bei niedrigen Temperaturen einen schützenden Überzug bildet, der bei Bedarf mit vergleichsweise geringem Aufwand wieder entfernt werden kann.

Des Weiteren ist angestrebt, ein einfaches und effizientes Verfahren zum Herstellen einer derartigen Zusammensetzung bereitzustellen sowie ein einfaches und effizientes Beschichtungsverfahren bereitzustellen.

Darüber hinaus ist es ein Ziel der vorliegenden Erfindung, eine titanhaltige Beschichtung bereitzustellen, die den damit beschichteten Gegenstand vor Verschmutzung schützt und bei Bedarf mit vergleichsweise geringem Aufwand wieder entfernt werden kann.

### ZUSAMMENFASSUNG DER ERFINDUNG

Die Erfinder der vorliegenden Erfindung haben umfangreiche Studien zur Lösung dieser Aufgaben durchgeführt und insbesondere herausgefunden, dass mit einer Zusammensetzung, die auf zwei unterschiedlichen Titanverbindungen basiert, nämlich neben Titandioxid auch ein organisches Titanat enthält, in Verbindung mit einem speziellen Lösungsmittelgemisch und einem Polysiloxan die erfindungsgemäß gewünschten Eigenschaften erzielt werden können.

Die vorliegende Erfindung betrifft dementsprechend eine Zusammensetzung zum Auftragen auf einer Oberfläche zur Ausbildung einer Beschichtung bzw. eines Überzugs, wobei die Zusammensetzung zwei unterschiedliche Titanverbindungen umfasst, eine Lösung oder eine Suspension von Partikeln aus Titandioxid in einer Säure und ein organisches Titanat. Des Weiteren enthält die Zusammensetzung Ethanol, mindestens einen weiteren Alkohol, der bei 20°C einen niedrigeren Dampfdruck aufweist als Ethanol und mit Ethanol in beliebigen Verhältnissen mischbar ist, ein Polysiloxan oder ein Derivat davon und optional ein oder mehrere Additive.

Des Weiteren betrifft die vorliegende Erfindung ein Verfahren zur Herstellung einer Zusammensetzung zum Auftragen auf einer Oberfläche, insbesondere einer erfindungsgemäßen Zusammensetzung, umfassend folgende Schritte:
zumindest teilweises Lösen eines Polysiloxans oder Derivats davon in Ethanol und optional Lösen eines oder mehrerer Additive in Ethanol,
zumindest teilweises Lösen von Partikeln aus Titandioxid in einer Säure,
Lösen von organischem Titanat in einem Alkohol, insbesondere Isopropanol,
Bereitstellen mindestens eines weiteren Alkohols, der bei 20°C einen niedrigeren Dampfdruck aufweist als Ethanol und mit Ethanol in beliebigen Verhältnissen mischbar ist,
Mischen der hergestellten Lösungen bzw. Suspensionen sowie des bereitgestellten Alkohols (im Folgenden auch als (erfindungsgemäßes) Herstellungsverfahren bezeichnet).

Die erfindungsgemäße Zusammensetzung kann insbesondere zur Ausbildung einer Beschichtung eingesetzt werden, die den damit beschichteten Gegenstand vor nachhaltiger Verschmutzung schützen kann.

Dementsprechend betrifft die vorliegende Erfindung auch die Verwendung der erfindungsgemäßen Zusammensetzung zur Herstellung einer Beschichtung auf einem Gegenstand durch Aufbringen bzw. Auftragen und optional Einpolieren der Zusammensetzung.

Weiterhin betrifft die vorliegende Erfindung ein Verfahren zur Beschichtung eines Gegenstands, umfassend folgende Schritte:
Auftragen einer erfindungsgemäßen Zusammensetzung auf einer Oberfläche des Gegenstands, und
optional Einpolieren der aufgetragenen Zusammensetzung (im Folgenden auch als (erfindungsgemäßes) Beschichtungsverfahren bezeichnet).

Darüber hinaus betrifft die vorliegende Erfindung eine titanhaltige (insbesondere eine titandioxid- und organisches titanathaltige) Beschichtung, gebildet aus einer erfindungsgemäßen Zusammensetzung bzw. erhältlich nach einem erfindungsgemäßen Beschichtungsverfahren.

Ein mit der Erfindung erzielter Vorteil ist insbesondere darin zu sehen, dass eine Zusammensetzung bereitgestellt wird, die auf einfache Weise bei Raumtemperatur auf zu schützende Oberflächen von Gegenständen aufgetragen werden kann, beispielsweise durch Aufsprühen oder Einpolieren, und aufgrund der vorgesehenen Alkohole mit optimaler Geschwindigkeit einzieht und einen schützenden Überzug bildet, ohne dass eine Aushärtung des Überzugs bei erhöhten Temperaturen erforderlich ist. Ethanol sorgt in der erfindungsgemäßen Zusammensetzung für einen hohen Glanz und eine glatte Oberfläche. Da allerdings Ethanol alleine bei der Verarbeitung zu schnell verdampfen würde, ist zumindest ein weiterer Alkohol vorgesehen, der bei 20 °C einen niedrigeren Dampfdruck aufweist. Dadurch ist sichergestellt, dass sich ein glatter Überzug ohne Inhomogenitäten bildet. Polysiloxan oder Derivate davon dienen als Einzugsmittel der Flüssigkeit und stellen ein gutes Verlaufen der Flüssigkeit auf der Oberfläche sicher. Des Weiteren wird vermutet, dass sich Polysiloxane mit den Precursor-Partikeln aus Titandioxid sowie organischem Titanat unter Ausbildung des Überzugs verbinden. Ein Überzug aus einer erfindungsgemäßen Zusammensetzung zeichnet sich unter anderem dadurch aus, dass der Überzug zum einen eine relativ gute Haltbarkeit aufweist und mit einem Tuch, gegebenenfalls auch befeuchtet, gereinigt werden kann, ohne dass der Überzug beschädigt wird. Zum anderen ist die Haftung des Überzugs auf verschiedenen Flächen wie beispielsweise Glas oder Granit nicht so hoch, dass der Überzug nicht durch kräftiges Reinigen mit Wasser oder einem geeigneten Reinigungsmittel abgelöst werden könnte. Ein Überzug aus einer erfindungsgemäßen Zusammensetzung weist somit ein Optimum aus Haftung einerseits und Ablösbarkeit andererseits auf.

Eine Beschichtung aus einer erfindungsgemäßen Zusammensetzung kann darüber hinaus dafür sorgen, dass eine Eisbildung bei Windrädern verhindert werden kann. Dementsprechend kann eine Beschichtung aus einer erfindungsgemäßen Zusammensetzung zum Schutz vor Eisbildung bei Windrädern und dergleichen verwendet werden.

Weitere Aufgaben und Vorteile von Ausführungsformen der vorliegenden Erfindung werden an Hand der folgenden detaillierten Beschreibung ersichtlich.

### DETAILLIERTE BESCHREIBUNG DER ERFINDUNG

Im Folgenden werden nähere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform der erfindungsgemäßen Zusammensetzung beschrieben werden, mit jeder anderen beispielhaften Ausführungsform der erfindungsgemäßen Zusammensetzung sowie mit jeder beispielhaften Ausführungsform der erfindungsgemäßen Verfahren, Verwendungen und Beschichtungen kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und das", im Singular bezeichnet wird, schließt dies auch den Begriff im Plural mit ein und umgekehrt, sofern der Kontext nicht eindeutig anderes festlegt. Der Ausdruck "umfassend", wie er hier verwendet wird, schließt nicht nur die Bedeutung von "enthalten" oder "beinhalten" ein, sondern kann auch "bestehen aus" und "im Wesentlichen bestehen aus" bedeuten.

Die Zusammensetzung zum Auftragen auf einer Oberfläche zur Ausbildung einer Beschichtung bzw. eines Überzugs umfasst zwei unterschiedliche Titanverbindungen: eine Lösung oder eine Suspension von Partikeln aus Titandioxid in einer Säure und ein organisches Titanat, das vorzugsweise in Isopropanol gelöst ist. Des Weiteren enthält die Zusammensetzung Ethanol, mindestens einen weiteren Alkohol (neben Ethanol), der bei 20°C einen niedrigeren Dampfdruck aufweist als Ethanol und mit Ethanol in beliebigen Verhältnissen mischbar ist, ein Polysiloxan oder ein Derivat davon und optional ein oder mehrere Additive. Die Zusammensetzung kann insbesondere eine flüssige Zusammensetzung sein.

In einer beispielhaften Ausführungsform ist die Zusammensetzung eine (klare) Lösung, d.h. sämtliche Bestandteile oder Komponenten der Zusammensetzung lösen sich im Wesentlichen vollständig in dem verwendeten Lösungsmittel.

In einer alternativen Ausführungsform ist die Zusammensetzung eine Dispersion, insbesondere eine Suspension, d.h. eine oder mehrere Bestandteile oder Komponenten der Zusammensetzung lösen sich nicht oder nur teilweise in dem verwendeten Lösungsmittel. Die Zusammensetzung kann somit (feste) Partikel von einer oder mehreren Komponenten enthalten. Insbesondere kann es sein, dass sich das Polysiloxan oder ein Derivat davon und/oder das Titandioxid nicht vollständig löst. Die Zusammensetzung kann somit eine Suspension sein, die Polysiloxan- und/oder Titandioxidpartikel enthält.

In einer beispielhaften Ausführungsform liegt das Titandioxid in der Rutil-Morphologie vor. Im Rahmen von Versuchen hat sich gezeigt, dass sich derartige Partikel besonders gut für eine Zusammensetzung zur Herstellung eines Überzugs eignen.

In einer beispielhaften Ausführungsform enthält die Zusammensetzung maximal 7 Gew.-%, insbesondere maximal 3 Gew.-%, gelöste Partikel aus Titandioxid und/oder maximal 4 Gew.-% organisches Titanat. Es hat sich gezeigt, dass sich Zusammensetzungen mit einem niedrigen Gehalt an Partikeln aus Titandioxid nicht nur auf verschiedene Arten, beispielsweise durch Spritzen, Sprühen, oder mit einem Tuch auf einer Oberfläche aufbringen lassen, sondern die Zusammensetzungen im aufgebrachten Zustand für etwa 5 bis 10 Minuten auch gut verarbeitbar bzw. einpolierbar sind, was erwünscht ist. In einer beispielhaften Ausführungsform enthält die Zusammensetzung mindestens 1 Gew.-% gelöste Partikel aus Titandioxid und/oder mindestens 1 Gew.-% organisches Titanat.

In einer beispielhaften Ausführungsform ist die Säure Schwefelsäure oder Flusssäure. Hierdurch lassen sich die Partikel aus Titandioxid (vollständig) lösen bzw. zumindest anlösen (teilweise lösen), wobei im letztgenannten Fall ein anschließendes Absieben vorteilhaft ist.

Unter einem "organischen Titanat" im Sinne der vorliegenden Anmeldung wird im Allgemeinen ein organischer Ester einer Titansäure verstanden. Beispiele hierfür beinhalten Tetraalkyltitanate, wie Tetramethyltitanat, Tetrabutyltitanat, Tetraisopropyltitanat oder Tetrahexyltitanat, Tetraphenyltitanat und Dibutyltriethanolamintitanat.

In einer beispielhaften Ausführungsform ist das organische Titanat in Isopropanol gelöst und/oder der mindestens eine weitere Alkohol, der bei 20°C einen niedrigeren Dampfdruck aufweist als Ethanol und mit Ethanol in beliebigen Verhältnissen mischbar ist, umfasst zumindest Isopropanol.

In einer beispielhaften Ausführungsform beträgt ein Gehalt des mindestens einen weiteren Alkohols, der bei 20°C einen niedrigeren Dampfdruck aufweist als Ethanol (und somit weniger flüchtig als Ethanol ist) und mit Ethanol in beliebigen Verhältnissen mischbar ist, mindestens 60 Gew.-%, insbesondere mindestens 80 Gew.-%, bezogen auf die Zusammensetzung. Hierdurch kann dafür gesorgt werden, dass die Zusammensetzung nicht allzu schnell verdampft, wenn diese verarbeitet wird.

In einer beispielhaften Ausführungsform enthält die Zusammensetzung 12 bis 16 Gew.-% Ethanol. Eine Begrenzung der Menge an Ethanol, der relativ rasch verdampft, verhindert ebenfalls ein zu schnelles Verdunsten der Zusammensetzung, wenn diese verarbeitet wird.

In einer beispielhaften Ausführungsform beträgt ein Gehalt des Polysiloxans oder Derivats davon maximal 4 Gew.-%, insbesondere maximal 3 Gew.-%, bezogen auf die Zusammensetzung. In einer beispielhaften Ausführungsform beträgt ein Gehalt des Polysiloxans oder Derivats davon mindestens 0,5 Gew.- %. Ein geeignetes Beispiel für ein Polysiloxan oder ein Derivat davon ist Polydimethylsiloxan.

In einer beispielhaften Ausführungsform umfasst die Zusammensetzung ferner mindestens ein Additiv, ausgewählt aus der Gruppe, bestehend aus Verlaufmittel, Kraterverhinderungsmittel und Glanzverstärker.

In einer beispielhaften Ausführungsform ist die erfindungsgemäße Zusammensetzung im Wesentlichen wasserfrei und/oder im Wesentlichen frei von Silikaten oder anderen Oxiden, außer Titandioxid. Bei Bedarf kann eine erfindungsgemäße Zusammensetzung aber auch mit Wasser verdünnt werden.

Ein Herstellungsverfahren, d.h. ein Verfahren zur Herstellung einer Zusammensetzung zum Auftragen auf einer Oberfläche, insbesondere einer erfindungsgemäßen Zusammensetzung, umfasst folgende Schritte:
zumindest teilweises Lösen eines Polysiloxans oder Derivats davon in Ethanol und optional Lösen eines oder mehrerer Additive in Ethanol,
zumindest teilweises Lösen von Partikeln aus Titandioxid in einer Säure,
Lösen von organischem Titanat in einem Alkohol, insbesondere Isopropanol,
Bereitstellen mindestens eines weiteren Alkohols, der bei 20°C einen niedrigeren Dampfdruck aufweist als Ethanol und mit Ethanol in beliebigen Verhältnissen mischbar ist,
Mischen der hergestellten Lösungen bzw. Suspensionen sowie des bereitgestellten Alkohols.

Mit dem erfindungsgemäßen Herstellungsverfahren lässt sich unmittelbar und in einfacher Weise eine gut verarbeitbare Zusammensetzung herstellen, die auf verschiedene Gegenstände zur Bildung eines schützenden Überzugs aufgebracht werden kann. Dabei ist es nicht erforderlich, den Überzug bei erhöhten Temperaturen auszuhärten.

In einer beispielhaften Ausführungsform sind die eingesetzten Partikel aus Titandioxid in der Rutil-Morphologie vorliegende Partikel, die vorzugsweise eine durchschnittliche Korngröße von weniger als 0,25 mm haben. Es hat sich gezeigt, dass sich derartige Partikel in der Säure relativ gut anlösen, so dass selbst wenn keine klare Flüssigkeit erhalten wird, eine gut verarbeitbare Suspension erhalten wird, die in der Folge nach weiterer Verarbeitung zu einem klaren, homogenen Überzug führt.

In einer beispielhaften Ausführungsform werden maximal 7 Gew.-%, vorzugsweise 3 Gew.-% Partikel aus Titandioxid gelöst und mit maximal 4 Gew.-% organischen Titanaten gemischt. Hierdurch kann die zu erstellende Zusammensetzung möglichst gut verarbeitbar gemacht werden.

In einer beispielhaften Ausführungsform ist die Säure zum zumindest teilweisen Lösen Schwefelsäure oder Flusssäure. Dadurch lassen sich die Partikel aus Titandioxid besonders gut lösen bzw. zumindest anlösen. Das Lösen kann durch Erhitzen auf 100 °C weiter verbessert werden.

In einer beispielhaften Ausführungsform ist das organische Titanat in Isopropanol gelöst, insbesondere werden maximal 4 Gew.-% organische Titanate in Isopropanol gelöst.

In einer beispielhaften Ausführungsform beträgt ein Gehalt des mindestens einen weiteren Alkohols, der bei 20°C einen niedrigeren Dampfdruck aufweist als Ethanol (und somit weniger flüchtig als Ethanol ist) und mit Ethanol in beliebigen Verhältnissen mischbar ist, mindestens 60 Gew.-%, insbesondere mindestens 80 Gew.-%, bezogen auf die Zusammensetzung. Hierdurch kann dafür gesorgt werden, dass die Zusammensetzung auf einfache Weise aufgetragen und über längere Zeit verarbeitet werden kann.

In einer beispielhaften Ausführungsform wird der Ethanol-Gehalt der Zusammensetzung auf 12 bis 16 Gew.-% eingestellt. Eine Begrenzung der Menge an Ethanol, der relativ rasch verdampft, verhindert ebenfalls eine zu kurze Verarbeitbarkeit der Zusammensetzung.

In einer beispielhaften Ausführungsform wird ein Gehalt des Polysiloxans oder Derivats davon auf maximal 4 Gew.-%, insbesondere maximal 3 Gew.-%, insbesondere maximal 2 Gew.-%, bezogen auf die Zusammensetzung, eingestellt.

Ein weiteres Ziel der Erfindung wird durch die Verwendung einer Zusammensetzung zur Herstellung einer Beschichtung auf einem Gegenstand durch Aufbringen und optional Einpolieren der Zusammensetzung erreicht, wobei die vorstehenden dargelegten Vorteile volle Wirkung entfalten.

Ein Beschichtungsverfahren, d.h. ein Verfahren zur Beschichtung eines Gegenstands, umfasst ein Auftragen einer erfindungsgemäßen Zusammensetzung auf einer Oberfläche des Gegenstands und anschließend ein optionales Einpolieren der aufgetragenen Zusammensetzung. Ein Erwärmen der aufgetragenen und optional einpolierten Zusammensetzung zur Aushärtung der Zusammensetzung und Bildung der Beschichtung ist nicht erforderlich und ist daher in einer beispielhaften Ausführungsform nicht vorgesehen.

In einer beispielhaften Ausführungsform umfasst das Auftragen ein Aufsprühen, Aufspritzen und/oder ein Auftragen mit einem Tuch, mit dem zum Beispiel die Zusammensetzung auch einpoliert werden kann.

Eine titanhaltige Beschichtung bzw. ein titanhaltiger Überzug wird aus einer erfindungsgemäßen Zusammensetzung gebildet bzw. ist nach einem erfindungsgemäßen Beschichtungsverfahren erhältlich.

Weitere Merkmale, Vorteile und Wirkungen der Erfindung ergeben sich aus dem nachfolgenden Ausführungsbeispiel, das aber lediglich der Verdeutlichung der erfindungsgemäßen Lehren dienen und in keiner Weise den Umfang der vorliegenden Erfindung beschränken soll.

Im Folgenden ist die Herstellung einer beispielhaften erfindungsgemäßen Zusammensetzung beschrieben. Die Prozentangaben beziehen sich dabei auf die Anteile der jeweiligen Komponente in der fertigen Zusammensetzung:

Es werden 3 Gew.-% von Partikeln aus Titandioxid in der Rutil-Morphologie mit einer durchschnittlichen Korngröße von 0,2 mm in 2 Gew.-% konzentrierter Schwefelsäure so weit aufgelöst, bis sich eine rückstandsfreie, jedoch noch milchige trübe Flüssigkeit bildet. Nach dem Erkalten werden 4 Gew.-% organische Titanate beigemischt. Zu dieser leicht zähen Flüssigkeit werden ca. 80 Gew.-% Isopropanol hinzugemischt und das so erhaltene Gemisch für mindestens 5 Stunden in einem geschlossenen Behälter gerührt und gemischt. Am Ende dieses Schrittes wird eine milchige Flüssigkeit erhalten. Zu dieser Flüssigkeit werden ca. 15 Gew.-% Ethanol mit darin etwa 3 Gew.-% gelöstem Polydimethylsiloxan sowie als Additive 1,5 Gew.-% Byk 311 als Glanzverstärker, 0,11 Gew.-% Byk 380N zur Kraterverhinderung und 0,05 Gew% Byk 378 als zusätzliches Verlaufmittel beigemischt und weitere 30 Minuten gerührt. Alle erwähnten Byk Produkte bzw. Komponenten sind im Handel erhältlich. Die so erhaltene Flüssigkeit wird anschließend noch weiter homogenisiert und letztlich in gebrauchsfähigen Gebinden abgefüllt.

Die erfindungsgemäße Zusammensetzung kann in diverse Behältnisse abgefüllt werden. Die Zusammensetzung kann dann auf einfache Weise auf zu beschichtende Oberflächen, beispielsweise Glasscheiben, Innenteile von Kraftfahrzeugen, aber auch Flächen aus Granit, Marmor oder Holz aufgebracht und anschließend einpoliert werden. Aufgrund der erfindungsgemäß vorgesehenen Zusammensetzung wird durch die rasche Trocknung das Einpolieren sofort durchgeführt. Nach Einziehen der Zusammensetzung und Bildung eines Überzugs härtet dieser bei Raumtemperatur bzw. etwa 25 °C innerhalb von 12 bis 24 Stunden vollständig aus, ohne dass eine Erwärmung des Überzugs erforderlich wäre. Der so gebildete Überzug ist haftfest mit der beschichteten Oberfläche verbunden. Die Beschichtung kann nur mit einem speziellen Reinigungsmittel und erhöhter mechanischer Bearbeitung entfernt werden. Eine Reinigung der Oberfläche kann mit Wasser oder in Waschanlagen erfolgen.

Die vorliegende Erfindung wurde an Hand spezifischer Ausführungsformen und einem Ausführungsbeispiel beschrieben. Die Erfindung ist aber nicht hierauf beschränkt und verschiedene Modifikationen hiervon sind möglich, ohne den Umfang der vorliegenden Erfindung zu verlassen.

## Patentansprüche

1. Zusammensetzung zum Auftragen auf einer Oberfläche zur Ausbildung einer Beschichtung, wobei die Zusammensetzung Folgendes umfasst:
• eine Lösung oder eine Suspension von Partikeln aus Titandioxid in einer Säure,
• Ethanol
• organisches Titanat,
• mindestens einen weiteren Alkohol, der bei 20°C einen niedrigeren Dampfdruck aufweist als Ethanol und mit Ethanol in beliebigen Verhältnissen mischbar ist,
• Polysiloxan oder Derivat davon, und
• optional ein oder mehrere Additive.

2. Zusammensetzung nach Anspruch 1, wobei das Titandioxid in der Rutil-Morphologie vorliegt.

3. Zusammensetzung nach Anspruch 1 oder 2, wobei die Zusammensetzung maximal 7 Gew.-%, insbesondere maximal 3 Gew.-%, gelöste Partikel aus Titandioxid und/oder maximal 4 Gew.-% organisches Titanat enthält.

4. Zusammensetzung nach einem der vorherigen Ansprüche, wobei die Säure Schwefelsäure oder Flusssäure ist.

5. Zusammensetzung nach einem der vorherigen Ansprüche, wobei das organische Titanat in Isopropanol gelöst ist und/oder der mindestens eine weitere Alkohol Isopropanol umfasst.

6. Zusammensetzung nach einem der vorherigen Ansprüche, wobei ein Gehalt des mindestens einen weiteren Alkohols mindestens 60 Gew.-%, insbesondere mindestens 80 Gew.-%, bezogen auf die Zusammensetzung, beträgt.

7. Zusammensetzung nach einem der vorherigen Ansprüche, wobei die Zusammensetzung 12 bis 16 Gew.-% Ethanol enthält.

8. Zusammensetzung nach einem der vorherigen Ansprüche, wobei ein Gehalt des Polysiloxans oder Derivats davon maximal 4 Gew.-%, insbesondere maximal 3 Gew.-%, bezogen auf die Zusammensetzung, beträgt.

9. Zusammensetzung nach einem der vorherigen Ansprüche, ferner umfassend mindestens ein Additiv, ausgewählt aus der Gruppe, bestehend aus Verlaufmittel, Kraterverhinderungsmittel und Glanzverstärker.

10. Verfahren zur Herstellung einer Zusammensetzung zum Auftragen auf einer Oberfläche, insbesondere einer Zusammensetzung gemäß einem der Ansprüche 1 bis 9, umfassend folgende Schritte:
zumindest teilweises Lösen eines Polysiloxans oder Derivats davon in Ethanol und optional Lösen eines oder mehrerer Additive in Ethanol,
zumindest teilweises Lösen von Partikeln aus Titandioxid in einer Säure,
Lösen von organischem Titanat in einem Alkohol, insbesondere Isopropanol,
Bereitstellen mindestens eines weiteren Alkohols, der bei 20°C einen niedrigeren Dampfdruck aufweist als Ethanol und mit Ethanol in beliebigen Verhältnissen mischbar ist,
Mischen der hergestellten Lösungen bzw. Suspensionen sowie des bereitgestellten Alkohols.

11. Verfahren nach Anspruch 10, wobei die eingesetzten Partikel aus Titandioxid in der Rutil-Morphologie vorliegende Partikel sind, die vorzugsweise eine durchschnittlichen Korngröße von weniger als 0,25 mm haben.

12. Verwendung einer Zusammensetzung gemäß einem der Ansprüche 1 bis 10 zur Herstellung einer Beschichtung auf einem Gegenstand durch Aufbringen und optional Einpolieren der Zusammensetzung.

13. Verfahren zur Beschichtung eines Gegenstands, umfassend folgende Schritte:
Auftragen einer Zusammensetzung gemäß einem der Ansprüche 1 bis 10 auf einer Oberfläche des Gegenstands, und
optional Einpolieren der aufgetragenen Zusammensetzung.

14. Verfahren nach Anspruch 13, wobei das Auftragen ein Aufsprühen, Aufspritzen und/oder ein Auftragen mit einem Tuch umfasst.

15. Beschichtung, gebildet aus einer Zusammensetzung gemäß einem der Ansprüche 1 bis 10 bzw. erhältlich nach einem Verfahren gemäß Anspruch 13 oder 14.
